(19) Europäisches Patentamt
European Patent Office
Office européen des brevets

(11) **EP 4 133 604 B1**

(12) **EUROPEAN PATENT SPECIFICATION**

(45) Date of publication and mention
of the grant of the patent:
**29.07.2026  Bulletin 2026/31**

(21) Application number: **20733393.1**

(22) Date of filing: **15.06.2020**

(51) International Patent Classification (IPC):
**H04B 1/525** (2015.01)

(52) Cooperative Patent Classification (CPC):
**H04B 1/525; Y02D 30/70**

(86) International application number:
**PCT/EP2020/066422**

(87) International publication number:
**WO 2021/254586 (23.12.2021 Gazette 2021/51)**

(54) **QUADRATURE QUASI-CIRCULATOR**

QUADRATUR-QUASIZIRKULATOR

QUASI-CIRCULATEUR EN QUADRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2023  Bulletin 2023/07**

(73) Proprietor: **Huawei Technologies Co., Ltd.
Shenzhen, Guangdong 518129 (CN)**

(72) Inventors:
• **EZRI, Doron**
  **80992 Munich (DE)**
• **SHILO, Shimon**
  **80992 Munich (DE)**
• **REGEV, Dror**
  **80992 Munich (DE)**

(74) Representative: **Roth, Sebastian
Mitscherlich PartmbB
Karlstraße 7
80333 München (DE)**

(56) References cited:
**WO-A1-2020/035140      US-A- 4 801 901**

• **KOTA MITSUYA ET AL: "Demonstration of a
Silicon Waveguide Optical Circulator", IEEE
PHOTONICS TECHNOLOGY LETTERS., vol. 25,
no. 8, 1 April 2013 (2013-04-01), US, pages 721 -
723, XP055532867, ISSN: 1041-1135, DOI:
10.1109/LPT.2013.2247995**
• **REGEV DROR ET AL: "Modified re-configurable
quadrature balanced power amplifiers for half
and full duplex RF front ends", 2018 TEXAS
SYMPOSIUM ON WIRELESS AND MICROWAVE
CIRCUITS AND SYSTEMS (WMCS), IEEE, 5 April
2018 (2018-04-05), pages 1 - 4, XP033368672,
DOI: 10.1109/WMCAS.2018.8400625**

**Description**

<u>TECHNICAL FIELD</u>

The present disclosure relates to a Radio Frequency (RF) front end for wireless communications, in particular to an electronic quadrature quasi-circulator device. Accordingly, the device proposed by this disclosure can be used for multi-input multi-output (MIMO) architectures in a Half Duplex (HD), Full Duplex (FD), and/or Frequency Division Duplex (FDD) mode.

<u>BACKGROUND</u>

In transmit (TX) and receive (RX) antenna wireless communication scenarios, a Low Noise Amplifier (LNA) in the receive path needs to be protected from a transmit signal leakage (TX leakage). Simultaneous transmit receive (STR) antenna wireless communication scenarios, such as FD or FDD without a Diplexer, require a Transmit-Receive Self Interference Cancellation (SIC) mechanism. Conventional implementations of such SIC mechanisms are implemented at an output of a power amplifier (PA), i.e. between the TX output and the RX input, thus it is also referred to as "post-PA". Hence, such implementations "load" both TX and RX channels, thus creating a loss of power efficiency and of signal to noise ratio.

Magnetic and electronic circulator SIC is done today by coupling TX signal into a finite impulse response (FIR) filter for shaping post PA and combining the cancellation signal pre-LNA. Such schemes are complex, particularly not scalable to MIMO where self and mutual interferences are present, and also create TX and RX losses which degrade power efficiency and RX signal to noise ratio. In MIMO applications where mutual interferences between antennas exist, such SIC schemes cannot cancel mutual interferences. Mutual interference cancelers (MICs) between antennas are required, but they further increase losses and complexity, and also pose a limiting scaling barrier to the size of single antenna arrays.

Magnetic circulators cannot be integrated on chip, and are bulky and expensive. Thus, the use of magnetic circulators is less attractive in mobile applications. Electronic circulators may be more attractive, however, they face similar TX leakage canceling challenges as the magnetic circulators.

<u>WO 2020/035140 A1 discloses a RF front end based on a Quadrature Balanced Power Amplifier.</u>

<u>SUMMARY</u>

In view of the above-mentioned challenges, embodiments of the present disclosure aim to provide a new type of device that overcomes the above-mentioned issues. An objective is in particular to provide a device that is enabled with an embedded, efficient SIC port that eliminates the need for post-PA/Pre-LNA complex circulator cancellation schemes. One aim is to cancel mutual interferences in MIMO applications.

The objective is achieved by the embodiments provided in the enclosed independent claims. Advantageous implementations of the embodiments are further defined in the dependent claims.

In particular, embodiments of the invention present an electronic quadrature quasi circulator device as the new type of device.

A first aspect of the disclosure provides the quadrature quasi-circulator device comprising: a first port, a second port, a third port, and a fourth port; a first 90 degree reciprocal phase shifter, RPS, between the first port and the second port; a second 90 degree RPS between the second port and the third port; a third 90 degree non-reciprocal phase shifter, NRPS, between the third port and the fourth port; and a fourth 90 degree RPS between the fourth port and the first port; wherein the each of the third and fourth port is isolated from the first port. Further, the first port is configured to receive a transmit input signal; the second port is configured to output a transmit signal to an antenna, or to receive a signal from an antenna; the third port is configured to receive a signal from the second port, the fourth port, or both, and to output the received signal to a signal processing section; and the fourth port is configured to receive a cancellation input signal and inject the cancellation input signal to the third port, wherein the third port is further configured to receive the cancellation input signal and inject the cancellation input signal to the fourth port; and the fourth port is further configured to receive a signal from the second port, the third port, or both, and to output the received signal to a signal processing section.

Embodiments of this disclosure accordingly propose to modify a conventional design of a circulator device by adding a fourth port to the same quadrature scheme. In particular, a new dedicated port may be added to a three-port circulator device, to implement the quadrature quasi-circulator device of the first aspect. In particular, the new port may be used for injecting a SIC signal, to enable MIMO mutual interferences cancellation, and thus to eliminate the need for mutual complex SIC filters. In this way, there is no need to introduce a complex post PA SIC implementation. According to this disclosure, an extra SIC signal may be received at the fourth port, and may be further injected to the third port for canceling interferences. In addition, a "symmetry" may exist between the third port and the fourth port. That is, the third port and the fourth port may have same functionalities.

In an implementation form of the first aspect, a phase of a forward signal path from the first port through second port to the third port is 180 degrees, and a phase of a forward signal path from the first port through fourth port to the third port is 0 degree.

Notably, due to the first 90 degree RPS between the first and second sports, and the second 90 degree RPS between the second and third ports, the phase of the forward signal path from the first port through second port to the third port will be 180 degrees. Similarly, due to the third 90 degree NRPS between the third and the fourth ports, and the fourth 90 degree RPS between the fourth and first ports, the phase of the forward signal path from the first port through fourth port to the third port is 0 degree. Thus, when a virtual electric ground is set on the third port, the NRPS will "mirror" the virtual electric ground at the third port to the fourth port. In this way, each of the third port and the fourth port can be isolated from the first port.

In a further implementation form of the first aspect, the cancellation input signal received at the fourth port is used to cancel a leakage signal caused at the third port when the transmit signal is output from the second port, and/or the cancellation input signal received at the third port is used to cancel a leakage signal caused at the fourth port when the transmit signal is output from the second port.

As previously discussed, the SIC signal may be used to cancel interferes/leakages. Since there is a "symmetry" between the third port and the fourth port, the SIC signal may be received at the third port, or at the fourth port. In a specific implementation, both the third port and the fourth port may receive a SIC input.

In a further implementation form of the first aspect, the quadrature quasi-circulator device is further configured to: direct a determined portion of a power of the cancellation input signal from the fourth port, in particular 4/9 of the power of the cancellation input signal, to the third port; and/or direct a determined portion of a power of the cancellation input signal from the third port, in particular 4/9 of the power of the cancellation input signal, to the fourth port.

Optionally, the SIC signal may direct 4/9 of its power to the RX port for TX leakage cancellation. Since both of the third port and the fourth port may serve as RX port or SIC port, respectively, 4/9 of the power of the SIC signal may be direct from the fourth port to the third port, or the other way round.

In a further implementation form of the first aspect, the quadrature quasi-circulator device is further configured to operate in HD mode; and in a TX mode, direct the full power of the transmit input signal received at the first port to the second port.

Optionally, when operating in the HD mode, the TX port transmits all the TX power to the antenna port in TX mode.

In a further implementation form of the first aspect, the quadrature quasi-circulator device is further configured to operate in HD mode; and in a RX mode, direct a portion of a power, in particular 8/9 of the power, of the signal from the antenna received at the second port to the third port and the fourth port, wherein the portion of the power is equally divided between a first forward signal from the second port to the third port and a second forward signal from the second port to the fourth port, and wherein a phase of the second forward signal leads a phase of the first forward signal by 90 degrees.

Optionally, when operating in the HD mode, in the RX mode, 8/9 of the input signal power received at the antenna is coupled with equal amplitudes and a phase difference of 90 degrees into the third and fourth ports.

In a further implementation form of the first aspect, if one of the fourth port and the third port is disabled, the quadrature quasi-circulator device is further configured to direct the full power of the signal from the antenna received at the second port to the other one of the fourth port and the third port.

Notably, when disconnecting one of the fourth port and the third port, the quadrature quasi-circulator device can be reduced to the conventional three-port circulator.

In a further implementation form of the first aspect, the quadrature quasi-circulator device is configured to be applied to a MIMO architecture in HD mode, FD mode or FDD mode, wherein the cancellation input signal is used to cancel all self and mutual leakages.

In a further implementation form of the first aspect, a scattering matrix S of the quadrature quasi-circulator device is represented as:

$$ S = \begin{bmatrix} 0 & j/3 & -2/3 & j2/3 \\ j & 0 & 0 & 0 \\ 0 & j2/3 & -1/3 & -j2/3 \\ 0 & -2/3 & j2/3 & -1/3 \end{bmatrix}, $$

wherein each entry $S_{xy}$ of the scattering matrix S represents a portion of a square root of a power of a signal that is directed by the quadrature quasi-circulator device from the $y^{th}$ port to the $x^{th}$ port, wherein x and y each can be 1, 2 3, and 4 and x is not equal to y, and each entry $S_{xx}$ represents a portion of a square root of a power of a signal that is reflected at the $x^{th}$ port.

Notably, a scattering matrix or S-matrix can be used to describe the quadrature quasi-circulator.

In a further implementation form of the first aspect, when the third port or the fourth port is disabled, the scattering matrix S of the quadrature quasi-circulator device is represented as:

$$ S = \begin{bmatrix} 0 & 0 & -1 \\ j & 0 & 0 \\ 0 & j & 0 \end{bmatrix}. $$

As previously discussed, if one of the fourth port and the third port is disconnected or disabled, the quadrature quasi-circulator device will be reduced to the conventional three-port circulator. Accordingly, the scattering matrix S will also be reduced to the matrix form of the three-port circulator.

A second aspect of the disclosure provides a method for operating a quadrature quasi-circulator device with a first port, a second port, a third port, and a fourth port, the method comprising: reciprocal phase shifting a signal transmitted from the first port to the second port by 90 degree; reciprocal phase shifting a signal transmitted from the second port to the third port by 90 degree; non-reciprocal phase shifting a signal transmitted from the third port to the fourth port by 90 degree; reciprocal phase shifting a signal transmitted from the fourth port to the first port by 90 degree; and wherein the fourth port is isolated from the first port. The method further comprises: receiving, by the first port, a transmit input signal; outputting, by the second port, a transmit signal to an antenna, or receiving, by the second port, a signal from an antenna; receiving, by the third port, a signal from the second port, the fourth port, or both, and outputting, by the third port, the received signal to a signal processing section; and receiving, by the fourth port, a cancellation input signal and injecting, by the fourth port, a cancellation input signal to the third port. The method further comprises: receiving, by the third port, the cancellation input signal and injecting, by the third port, the cancellation input signal to the fourth port; and receiving, by the fourth port, a signal from the second port, the third port, or both, and outputting, by the fourth port, the received signal to a signal processing section.

The method of the second aspect may be developed in implementation forms according to the implementation forms described above for quadrature quasi-circulator device of the first aspect. With the method of the second aspect and its implementation forms, the advantages and effects of the quadrature quasi-circulator device of the first aspect and its respective implementation forms are thus achieved.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present disclosure will be explained in the following description of specific embodiments in relation to the enclosed drawings, in which

FIG. 1      shows a three-port circulator (FIG. 1(a)) and an ideal equivalent schematic of the circulator (FIG. 1(b)).

FIG. 2      shows a quadrature quasi-circulator device according to an embodiment of the disclosure.

FIG. 3      shows an ideal equivalent schematic of a quadrature quasi-circulator device according to an embodiment of the disclosure.

FIG. 4      shows a method according to an embodiment of the disclosure.

DETAILED DESCRIPTION OF EMBODIMENTS

Illustrative embodiments of a quadrature quasi-circulator device and corresponding methods for canceling mutual interferences in MIMO applications are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

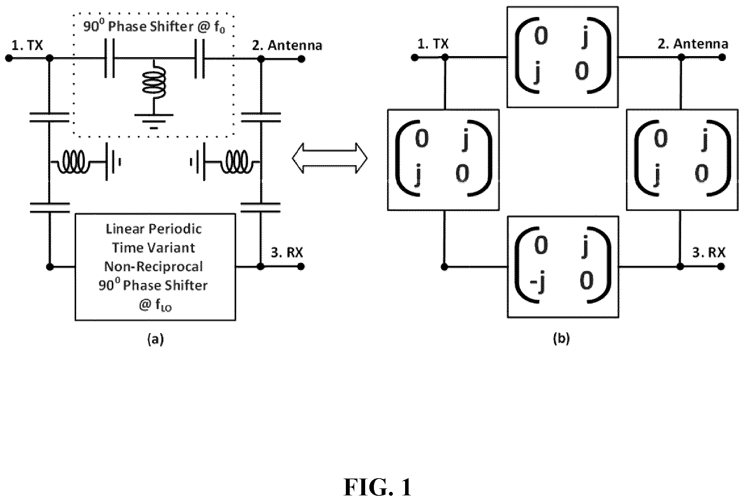

FIG. 1 shows a conventional electronic circulator in a transceiver. A three-port electronic circulator is particularly shown in FIG. 1(a), and its ideal equivalent schematic is shown in FIG. 1(b).

In particular, this circulator comprises a port 1: TX port, a port 2: antenna port, and a port 3: RX port. When selecting the frequency of operation $f_0$ close or equal to the local oscillator (LO) frequency $f_{LO}$, the electronic circuit of the circulator can be visualized as a quadrature circuit of three passive, two port 90 degree RPSs connected to one two port 90 degree NRPS.

A three-port S-matrix that describe the electronic circulator of FIG. 1 is given by:

$$S = \begin{bmatrix} 0 & 0 & -1 \\ j & 0 & 0 \\ 0 & j & 0 \end{bmatrix}.$$

The S-matrix or scattering matrix relates the initial state and the final state of a physical system undergoing a scattering process. Here each entry $S_{xy}$ of the scattering matrix S represents a portion of a square root of a power of a signal that is directed by the circulator from the $y^{th}$ port to the $x^{th}$ port. Each entry $S_{xx}$ represents a portion of a square root of a power of a signal that is reflected at the $x^{th}$ port.

Notably, the ideal functionality of this conventional circulator results in a full amplitude coupling between ports: 1 & 2, 2 & 3 and 3 & 1 (as shown in the matrix: $S_{21} = j$, $S_{32} = j$, $S_{13} = -1$). That is, this circuit ideally isolates ports 2 & 1, 3 & 2, and most importantly for a transceiver, it also isolates ports 1 & 3. Hence, ideally a TX signal at port 1 does not couple into port 3 i.e., the RX port ($S_{12} = 0$, $S_{23} = 0$, $S_{31} = 0$). All three ports are perfectly matched ($S_{11} = 0$, $S_{22} = 0$, $S_{33} = 0$).

As previously discussed, this type of circulator requires post PA SIC implementations, which introduce both TX and RX power losses, and hence degrade power efficiency and RX signal to noise ratio.

Embodiments of this disclosure thus propose to modify the conventional design by adding a fourth port to the same quadrature scheme (the 90 degree NRPS maybe similar or different than the one described in Fig. 1(a)). Notably, the fourth port changes the functionality of the conventional electronic circulator. Embodiments of this disclosure enable a quadrature quasi-circulator device with an embedded, efficient SIC port that eliminates the need for post-PA/Pre-LNA complex circulator canceling schemes. Embodiments of this disclosure also allow HD implementations.

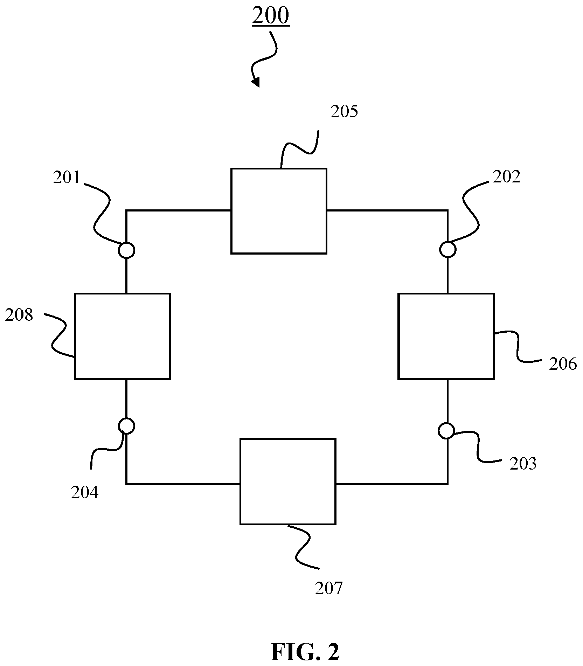

FIG. 2 shows a quadrature quasi-circulator device 200 according to an embodiment of the disclosure. In particular, the quadrature quasi-circulator device 200 comprises a first port 201, a second port 202, a third port 203, and a fourth port 204. In addition, the quadrature quasi-circulator device 200 further comprises a first 90 degree RPS 205 between the first port 201 and the second port 202; a second 90 degree RPS 206 between the second port 202 and the third port 203; a third 90 degree NRPS 207 between the third port 203 and the fourth port 204; and a fourth 90 degree RPS 208 between the fourth port 204 and the first port 201. According to embodiments of this disclosure, each of the third port 203 and the fourth port 204 is isolated from the first port 201.

It should be noted that, according to embodiments of this disclosure, a phase of a forward signal path from the first port 201 through second port 202 to the third port 203 is 180 degree. Notably, this is resulted by the first 90 degree RPS 205 and the second 90 degree RPS 206. Similarly, a phase of a forward signal path from the first port 201 through fourth port 204 to the third port 203 is 0 degree. Accordingly, this is resulted by the third 90 degree NRPS 207 and the fourth 90 degree RPS 208.

In this way, when a virtual electric ground is assigned to the third port 203 (thus the third port 203 is isolated from the first port 201), the NRPS 207 will "mirror" the virtual electric ground at the third port to the fourth port. Notably, the NRPS 207 between the third port 203 and the fourth port 204 is "impedance transparent", hence it transfers the virtual ground of the third port 203 to the fourth port 204. That is, the fourth port 204 is also isolated from the first port 201.

Optionally, according to an embodiment of the disclosure, the first port 201 may be configured to receive a transmit input signal. The second port 202 may be configured to output a transmit signal to an antenna, and/or to receive a signal from an antenna. The third port 203 may be configured to receive a signal from the second port 202 and/or the fourth port 204, and to output the received signal to a signal processing section. Further, the fourth port 204 may be configured to receive a cancellation input signal and/or inject a cancellation input signal to the third port 203.

Preferably, according to an embodiment of the disclosure, the cancellation input signal received at the fourth port 204 may be used to cancel a leakage signal caused at the third port 203 when the transmit signal is output from the second port 202.

Preferably, according to an embodiment of the disclosure, the quadrature quasi-circulator device 200 may be further configured to direct a determined portion of a power of the cancellation input signal from the fourth port 204 to the third port 203. In particular, in a specific implementation, 4/9 of the power of the cancellation input signal is directed from the fourth port 204 to the third port 203.

It should be noted that there may be a "symmetry" between the third port 203 and the fourth port 204. Therefore, according to an embodiment of the disclosure, the third port 203 may be further configured to receive the cancellation input signal and/or inject the cancellation input signal to the fourth port 204. Optionally, according to an embodiment of the disclosure, the fourth port 204 may be further configured to receive a signal from the second port 202 and/or the third port 203, and to output the received signal to a signal processing section. That is, the third port 203 and the fourth port 204 may have the same functionalities.

Similarly, according to an embodiment of the disclosure, the cancellation input signal received at the third port 203 may be used to cancel a leakage signal caused at the fourth port 204 when the transmit signal is output from the second port 202.

Similarly, according to an embodiment of the disclosure, the quadrature quasi-circulator device 200 may be further configured to direct a determined portion of a power of the cancellation input signal from the third port 203 to the fourth port 204. In particular, in a specific implementation, 4/9 of the power of the cancellation input signal is directed from the third port 203 to the fourth port 204.

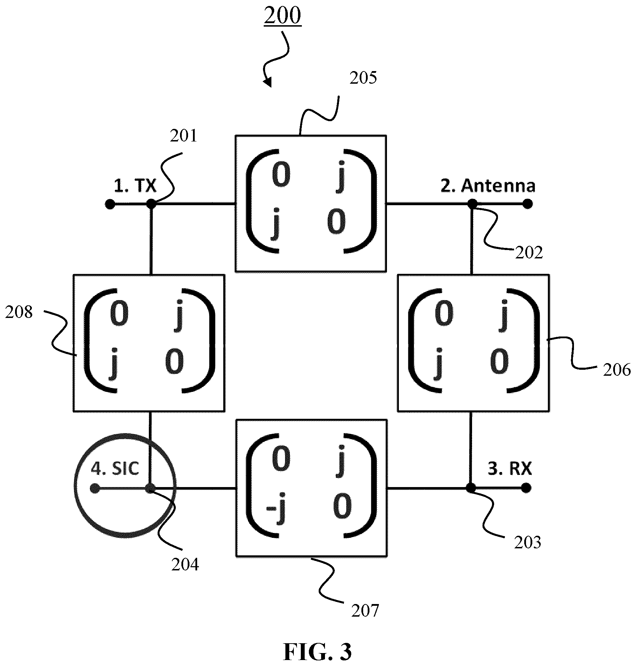

Notably, embodiments of this disclosure may thus be based on modifying a conventional circulator by adding the fourth port 204 to the same quadrature scheme. FIG. 3 shows an ideal equivalent schematic of the quadrature quasi-circulator device 200 according to an embodiment of the disclosure. Accordingly, same elements are provided with the same reference signs in the figures.

As shown in FIG. 3, an additional SIC port may be added into the conventional quadrature scheme. The SIC port (i.e., the fourth port 204) changes the functionality of the conventional circulator. In particular, the SIC port 204 allows to reduce a complexity of the circuit, and to achieve better performance and functionality.

A four-port S-matrix that describe the quadrature quasi-circulator device 200 of FIG. 2 or FIG. 3 is given by:

$$S = \begin{bmatrix} 0 & j/3 & -2/3 & j2/3 \\ j & 0 & 0 & 0 \\ 0 & j2/3 & -1/3 & -j2/3 \\ 0 & -2/3 & j2/3 & -1/3 \end{bmatrix}.$$

Notably, each entry $S_{xy}$ of the scattering matrix S represents a portion of a square root of a power of a signal that is directed by the quadrature quasi-circulator device 200 from the $y^{th}$ port to the $x^{th}$ port. According to this embodiment, x and y each can be 1, 2 3, and 4, and x is not equal to y. Each entry $S_{xx}$ represents a portion of a square root of a power of a signal that is reflected at the $x^{th}$ port.

Notably, a full amplitude coupling between the TX port (i.e., the first port 201) and the antenna port (i.e., the second port 202) ($S_{21} = j$) is achieved, hence there is no TX signal loss associated with the proposed structure. According to embodiments of the disclosure, the first port 201 and the second port 202 are perfectly matched ($S_{11} = 0$, $S_{22} = 0$), while the third port 203 and the fourth port 204 are partially matched ($S_{33} = $ -1/3, $S_{44} = $ -1/3).

According to embodiments of the disclosure, the circuit of the quadrature quasi-circulator device 200 may ideally isolate the two RX ports, i.e., the third port 203 and the fourth port 204, from the TX signal ($S_{31} = 0$, $S_{41} = 0$). That is, the TX signal will be fully transmitted to the antenna port with a 90 degree phase shift. Hence, both the third port 203 and the fourth port 204 can serve as an RX output, a SIC input, or simultaneously as both.

The ideal functionality of the proposed quadrature quasi-circulator device 200 may introduce a new built-in 2/3 voltage (4/9 power) coupling ($S_{34} = $ -j2/3) between the SIC port (i.e., the fourth port 204) and the RX port (i.e., the third port 203). Notably, preferably no coupling exists between the SIC port (i.e., the fourth port 204) and the antenna port (i.e., the second port 202), hence the SIC signal will not be transmitted with the TX signal ($S_{24} = 0$).

Moreover, RX signals entering the antenna port (i.e., the second port 202) couple 2/3 of the input voltage (4/9 of the RX power at the antenna) to each of the third port 203 and the fourth port 204 with a respective phase shift of 90 degrees ($S_{32} = j2/3$, $S_{42} = $ -2/3).

Further, it is worth mentioning that, in an embodiment of this disclosure, the fourth port 204 of the quadrature quasi-circulator device 200 can be disabled or disconnected. In such case, the scattering matrix S of the quadrature quasi-circulator device 200 will be represented as:

$$S = \begin{bmatrix} 0 & 0 & -1 \\ j & 0 & 0 \\ 0 & j & 0 \end{bmatrix}.$$

That is, if the additional SIC port, i.e., the fourth port 204, is disconnected, the scattering matrix S of the quadrature quasi-circulator device 200 is reduced to the same three-port scattering matrix of the conventional electronic circulator as previously discussed.

It should be noted that, due to the "symmetry" between the third port 203 and the fourth port 204, alternatively, in another embodiment of this disclosure, the third port 203 of the quadrature quasi-circulator device 200 may be disabled or disconnected. In this case, the scattering matrix S of the quadrature quasi-circulator device 200 has the same form as disconnecting the fourth port 204.

Further, the quadrature quasi-circulator device 200 proposed by embodiments of the disclosure can be used either for FD scenarios or HD scenarios.

Optionally, when the quadrature quasi-circulator device 200 operates in the HD mode, in a TX mode, the quadrature quasi-circulator device 200 may be configured to direct the full power of the transmit input signal received at the first port 201 to the second port 202. That is, the TX port transmits all the TX power to the antenna port in TX mode.

Optionally, when the quadrature quasi-circulator device 200 operates in the HD mode, in an RX mode, the quadrature quasi-circulator device 200 may be configured to direct a portion of a power of the signal from the antenna received at the second port 202 to the third port 203 and the fourth port 204. In particular, the portion of the power that the quadrature quasi-circulator device 200 directs may be 8/9. It should be noted that, the portion of the power is equally divided between a first forward signal from the second port 202 to the third port 203 and a second forward signal from the second port 202 to the fourth port 204. In particular, a phase of the second forward signal leads a phase of the first forward signal by 90 degrees.

It is worth mentioning that, since the power is equally divided between the first forward signal and the second forward signals, these two signals have the same power. Further, there is a 90 degree phase difference between the second forward signal and the first forward signal. Therefore, these two output signals from the third port 203 and the fourth port 204 can be utilized as inputs for I & Q channels.

Accordingly, in an embodiment of this disclosure, the quadrature quasi-circulator device 200 may be further configured to output signals from the third port 203 and the fourth port 204 as input signals to I & Q signal receive ports.

Notably, the quadrature quasi-circulator device 200 can be used for MIMO architectures in HD, FDD, and FD modes as well. For MIMO applications there may be multiple chains of quadrature quasi-circulator device 200. According to embodiments of this disclosure, in FDD and FD modes, no RF coupling between different antenna chains is required for canceling mutual TX leakages, as all SIC functionality can be lumped into the SIC port (i.e., the fourth port 204) of a respective quadrature quasi-circulator device 200 in each chain. That is, the cancellation input signal received by the fourth port 204 of each quadrature quasi-circulator device 200 can be used to cancel all self and mutual leakages.

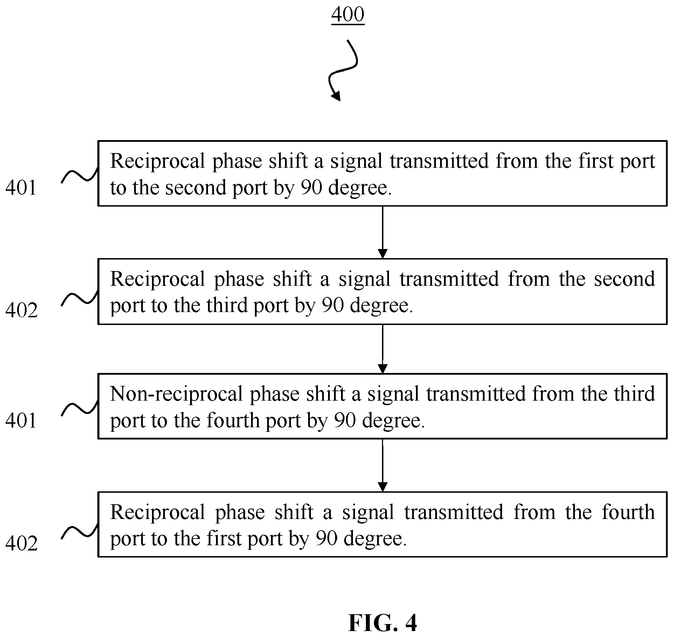

FIG. 4 shows a method 400 according to an embodiment of the disclosure. In a specific implementation, the method 400 is for operating a quadrature quasi-circulator device 200 as shown in FIG. 2 or FIG. 3, in particular, for operating a quadrature quasi-circulator device 200 with a first port 201, a second port 202, a third port 203, and a fourth port 204. The method 400 comprises a step 401 of reciprocal phase shifting a signal transmitted from the first port 201 to the second port 202 by 90 degree; a step 402 of reciprocal phase shifting a signal transmitted from the second port 202 to the third port 203 by 90 degree; a step 403 of non-reciprocal phase shifting a signal transmitted from the third port 203 to the fourth port 204 by 90 degree; and a step 404 of reciprocal phase shifting a signal transmitted from the fourth port 204 to the first port 201 by 90 degree. Further, the each of the third port 203 and the fourth port 204 is isolated from the first port 201.

It should be noted that, according to embodiments of this disclosure, a phase of a forward signal path from the first port 201 through second port 202 to the third port 203 is 180 degrees. A phase of a forward signal path from the first port 201 through fourth port 204 to the third port 203 is 0 degree.

In summary, embodiments of the present disclosure achieve multiple benefits. Advantages are:

- An enabled built-in SIC port can efficiently couple a wide-band canceling signal into the RX channel.

- The added SIC functionality can be from the fourth port 204 to the third port 203 or from the third port 203 to the fourth port 204 or both.

- The added SIC port enables also MIC.

- Output signals from the third port 203 and the fourth port 204 enable different IQ RX implementations.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the quadrature quasi-circulator device 200, comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the quadrature quasi-circulator device 200 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

**Claims**

1. A quadrature quasi-circulator device (200) comprising:

    a first port (201), a second port (202), a third port (203), and a fourth port (204);
    a first 90 degree reciprocal phase shifter, RPS (205), between the first port (201) and the second port (202);
a second 90 degree RPS (206) between the second port (202) and the third port (203);
a third 90 degree non-reciprocal phase shifter, NRPS (207), between the third port (203) and the fourth port (204); and
a fourth 90 degree RPS (208) between the fourth port (204) and the first port (201);
wherein the each of the third and fourth port (203, 204) is isolated from the first port (201);
wherein the first port (201) is configured to receive a transmit input signal;
the second port (202) is configured to output a transmit signal to an antenna, or to receive a signal from an antenna;
the third port (203) is configured to receive a signal from the second port (202), the fourth port (204), or both, and to output the received signal to a signal processing section; and
the fourth port (204) is configured to receive a cancellation input signal and inject the cancellation input signal to the third port (203),
wherein the third port (203) is further configured to receive the cancellation input signal and inject the cancellation input signal to the fourth port (204); and
the fourth port (204) is further configured to receive a signal from the second port (202), the third port (203), or both, and to output the received signal to a signal processing section.

2. The quadrature quasi-circulator device (200) according to claim 1, wherein a phase of a forward signal path from the first port (201) through second port (202) to the third port (203) is 180 degree, and a phase of a forward signal path from the first port (201) through fourth port (204) to the third port (203) is 0 degree.

3. The quadrature quasi-circulator device (200) according to claim 1 or 2, wherein

the cancellation input signal received at the fourth port (204) is used to cancel a leakage signal caused at the third port (203) when the transmit signal is output from the second port (202), and/or
the cancellation input signal received at the third port (203) is used to cancel a leakage signal caused at the fourth port (204) when the transmit signal is output from the second port (202).

4. The quadrature quasi-circulator device (200) according to claim 3, further configured to:

direct a determined portion of a power of the cancellation input signal from the fourth port (204), in particular 4/9 of the power of the cancellation input signal, to the third port (203); and/or
direct a determined portion of a power of the cancellation input signal from the third port (203), in particular 4/9 of the power of the cancellation input signal, to the fourth port (204).

5. The quadrature quasi-circulator device (200) according to one of the claims 1 to 4, further configured to:

operate in half-duplex mode; and
in a transmit mode, direct the full power of the transmit input signal received at the first port (201) to the second port (202).

6. The quadrature quasi-circulator device (200) according to one of the claims 1 to 5, further configured to:

operate in half-duplex mode; and
in a receive mode, direct a portion of a power, in particular 8/9 of the power, of the signal from the antenna received at the second port (202) to the third port (203) and the fourth port (204), wherein the portion of the power is equally divided between a first forward signal from the second port (202) to the third port (203) and a second forward signal from the second port (202) to the fourth port (204), and wherein a phase of the second forward signal leads a phase of the first forward signal by 90 degrees.

7. The quadrature quasi-circulator device (200) according to one of the claims 1 to 6, wherein if one of the fourth port (204) and the third port (203) is disabled, the quadrature quasi-circulator device (200) is further configured to:
direct the full power of the signal from the antenna received at the second port (202) to the other one of the fourth port (204) and the third port (203).

8. The quadrature quasi-circulator device (200) according to one of the claims 1 to 7, wherein the quadrature quasi-circulator device (200) is configured to be applied to a multiple-input and multiple-output, MIMO, architecture in half-duplex mode, full-duplex mode or frequency-division duplex mode, wherein the cancellation input signal is used to cancel all self and mutual leakages.

9. The quadrature quasi-circulator device (200) according to one of the claims 1 to 8, wherein a scattering matrix S of the quadrature quasi-circulator device (200) is represented as:

$$S = \begin{bmatrix} 0 & j/3 & -2/3 & j2/3 \\ j & 0 & 0 & 0 \\ 0 & j2/3 & -1/3 & -j2/3 \\ 0 & -2/3 & j2/3 & -1/3 \end{bmatrix},$$

wherein each entry $S_{xy}$ of the scattering matrix S represents a portion of a square root of a power of a signal that is directed by the quadrature quasi-circulator device from the $y^{th}$ **port** to the $x^{th}$ port, wherein x and y each can be 1, 2 3, and 4 and x is not equal to y, and each entry $S_{xx}$ represents a portion of a square root of a power of a signal that is reflected at the $x^{th}$ port.

10. The quadrature quasi-circulator device (200) according to claim 9, wherein, when the third port (203) or the fourth port (204) is disabled, the scattering matrix S of the quadrature quasi-circulator device (200) is represented as:

$$S = \begin{bmatrix} 0 & 0 & -1 \\ j & 0 & 0 \\ 0 & j & 0 \end{bmatrix}.$$

11. A method performed by a quadrature quasi-circulator device (200) with a first port (201), a second port (202), a third port (203), and a fourth port (204), the method comprising:

reciprocal phase shifting a signal transmitted from the first port (201) to the second port (202) by 90 degree;
reciprocal phase shifting a signal transmitted from the second port (202) to the third port (203) by 90 degree;
non-reciprocal phase shifting a signal transmitted from the third port (203) to the fourth port (204) by 90 degree;
reciprocal phase shifting a signal transmitted from the fourth port (204) to the first port (201) by 90 degree; and
wherein the each of the third and the fourth port (203, 204) is isolated from the first port (201),
wherein the method further comprises:

receiving, by the first port (201), a transmit input signal;
outputting, by the second port (202), a transmit signal to an antenna, or receiving, by the second port (202), a signal from an antenna;
receiving, by the third port (203), a signal from the second port (202), the fourth port (204), or both, and outputting, by the third port (203), the received signal to a signal processing section; and
receiving, by the fourth port (204), a cancellation input signal and injecting, by the fourth port (204), a cancellation input signal to the third port (203).
wherein the method further comprises:

receiving, by the third port (203), the cancellation input signal and injecting, by the third port (203), the cancellation input signal to the fourth port (204); and receiving, by the fourth port (204), a signal from the second port (202), the third port (203), or both, and outputting, by the fourth port (204), the received signal to a signal processing section.

**Patentansprüche**

1. Quadratur-Quasi-Zirkulator-Gerät (200), umfassend:

einen ersten Anschluss (201), einen zweiten Anschluss (202), einen dritten Anschluss (203) und einen vierten Anschluss (204);
einen ersten 90-Grad-Reziprok-Phasenverschieber, RPS (205), zwischen dem ersten Anschluss (201) und dem zweiten Anschluss (202);
einen zweiten 90-Grad-RPS (206) zwischen dem zweiten Anschluss (202) und dem dritten Anschluss (203);
einen dritten 90-Grad-Nicht-Reziprok-Phasenverschieber, NRPS (207), zwischen dem dritten Anschluss (203) und dem vierten Anschluss (204); und
einen vierten 90-Grad-RPS (208) zwischen dem vierten Anschluss (204) und dem ersten Anschluss (201);
wobei jeder des dritten und vierten Anschlusses (203, 204) von dem ersten Anschluss (201) isoliert ist;
wobei der erste Anschluss (201) konfiguriert ist, ein Übertragungseingabesignal zu empfangen;
der zweite Anschluss (202) konfiguriert ist, ein Übertragungssignal zu einer Antenne auszugeben oder ein Signal von einer Antenne zu empfangen;
der dritte Anschluss (203) konfiguriert ist, ein Signal von dem zweiten Anschluss (202), dem vierten Anschluss (204) oder beiden zu empfangen und das empfangene Signal zu einem Signalverarbeitungsabschnitt auszugeben; und
der vierte Anschluss (204) konfiguriert ist, ein Aufhebungseingabesignal zu empfangen und das Aufhebungseingabesignal in den dritten Anschluss (203) einzuspeisen,
wobei der dritte Anschluss (203) ferner konfiguriert ist, das Aufhebungseingabesignal zu empfangen und das Aufhebungseingabesignal in den vierten Anschluss (204) einzuspeisen; und der vierte Anschluss (204) ferner konfiguriert ist, ein Signal von dem zweiten Anschluss (202), dem dritten Anschluss (203) oder beiden zu empfangen und das empfangene Signal zu einem Signalverarbeitungsabschnitt auszugeben.

2. Quadratur-Quasi-Zirkulator-Gerät (200) nach Anspruch 1, wobei eine Phase eines Vorwärtssignalwegs von dem ersten Anschluss (201) durch den zweiten Anschluss (202) zu dem dritten Anschluss (203) 180 Grad beträgt und eine Phase eines Vorwärtssignalwegs von dem ersten Anschluss (201) durch den vierten Anschluss (204) zu dem dritten Anschluss (203) 0 Grad beträgt.

3. Quadratur-Quasi-Zirkulator-Gerät (200) nach Anspruch 1 oder 2, wobei das an dem vierten Anschluss (204) empfangene Aufhebungseingabesignal verwendet wird, ein an dem dritten Anschluss (203) verursachtes Lecksignal aufzuheben, wenn das Übertragungssignal von dem zweiten Anschluss (202) ausgegeben wird, und/oder das an dem dritten Anschluss (203) empfangene Aufhebungseingabesignal verwendet wird, ein an dem vierten Anschluss (204) verursachtes Lecksignal aufzuheben, wenn das Übertragungssignal von dem zweiten Anschluss (202) ausgegeben wird.

4. Quadratur-Quasi-Zirkulator-Gerät (200) nach Anspruch 3, ferner konfiguriert zum:
Leiten eines bestimmten Anteils einer Leistung des Aufhebungseingabesignals von dem vierten Anschluss (204), insbesondere 4/9 der Leistung des Aufhebungseingabesignals, zu dem dritten Anschluss (203); und/oder Leiten eines bestimmten Anteils einer Leistung des Aufhebungseingabesignals von dem dritten Anschluss (203), insbesondere 4/9 der Leistung des Aufhebungseingabesignals, zu dem vierten Anschluss (204).

5. Quadratur-Quasi-Zirkulator-Gerät (200) nach einem der Ansprüche 1 bis 4, ferner konfiguriert zum:

Arbeiten im Halbduplexmodus; und
in einem Übertragungsmodus Leiten der vollen Leistung des an dem ersten Anschluss (201) empfangenen Übertragungseingabesignals zu dem zweiten Anschluss (202).

6. Quadratur-Quasi-Zirkulator-Gerät (200) nach einem der Ansprüche 1 bis 5, ferner konfiguriert zum:

Arbeiten im Halbduplexmodus; und
in einem Empfangsmodus Leiten eines Anteil einer Leistung, insbesondere 8/9 der Leistung, des von der Antenne an dem zweiten Anschluss (202) empfangenen Signals zu dem dritten Anschluss (203) und dem vierten Anschluss (204), wobei der Anteil der Leistung gleichmäßig zwischen einem ersten Vorwärtssignal von dem zweiten Anschluss (202) zu dem dritten Anschluss (203) und einem zweiten Vorwärtssignal von dem zweiten Anschluss (202) zu dem vierten Anschluss (204) aufgeteilt wird und wobei eine Phase des zweiten Vorwärtssignals einer Phase des ersten Vorwärtssignals um 90 Grad voraus ist.

7. Quadratur-Quasi-Zirkulator-Gerät (200) nach einem der Ansprüche 1 bis 6, wobei, wenn einer des vierten Anschlusses (204) und des dritten Anschlusses (203) deaktiviert ist, das Quadratur-Quasi-Zirkulator-Gerät (200) ferner konfiguriert ist zum:
Leiten der vollen Leistung des von der Antenne an dem zweiten Anschluss (202) empfangenen Signals zu dem anderen einen des vierten Anschlusses (204) und des dritten Anschlusses (203).

8. Quadratur-Quasi-Zirkulator-Gerät (200) nach einem der Ansprüche 1 bis 7, wobei das Quadratur-Quasi-Zirkulator-Gerät (200) konfiguriert ist, auf eine Mehrfach-Eingang- und Mehrfach-Ausgang- bzw. MIMO-Architektur im Halbduplexmodus, Vollduplexmodus oder Frequenzduplexmodus angewandt zu werden, wobei das Aufhebungseingabesignal verwendet wird, alle Selbst- und wechselseitigen Leckagen aufzuheben.

9. Quadratur-Quasi-Zirkulator-Gerät (200) nach einem der Ansprüche 1 bis 8, wobei eine Streumatrix S des Quadratur-Quasi-Zirkulator-Geräts (200) wie folgt repräsentiert wird:

$$S = \begin{bmatrix} 0 & j/3 & -2/3 & j2/3 \\ j & 0 & 0 & 0 \\ 0 & j2/3 & -1/3 & -j2/3 \\ 0 & -2/3 & j2/3 & -1/3 \end{bmatrix},$$

wobei jeder Eintrag $S_{xy}$ der Streumatrix S einen Anteil einer Quadratwurzel einer Leistung eines Signals repräsentiert, das durch das Quadratur-Quasi-Zirkulator-Gerät von dem y-ten Anschluss zu dem x-ten Anschluss geleitet wird, wobei x und y jeweils 1, 2 3 und 4 sein können und x nicht gleich y ist und jeder Eintrag $S_{xx}$ einen Anteil einer Quadratwurzel einer Leistung eines Signals repräsentiert, das an dem x-ten Anschluss reflektiert wird.

10. Quadratur-Quasi-Zirkulator-Gerät (200) nach Anspruch 9, wobei, wenn der dritte Anschluss (203) oder der vierte Anschluss (204) deaktiviert ist, die Streumatrix S des Quadratur-Quasi-Zirkulator-Geräts (200) wie folgt repräsentiert wird:

$$S = \begin{bmatrix} 0 & 0 & -1 \\ j & 0 & 0 \\ 0 & j & 0 \end{bmatrix}.$$

11. Verfahren, durchgeführt durch ein Quadratur-Quasi-Zirkulator-Gerät (200) mit einem ersten Anschluss (201), einem zweiten Anschluss (202), einem dritten Anschluss (203) und einem vierten Anschluss (204), das Verfahren umfassend:

Reziprok-Phasenverschiebung eines von dem ersten Anschluss (201) zu dem zweiten Anschluss (202) übertragenen Signals um 90 Grad;
Reziprok-Phasenverschiebung eines von dem zweiten Anschluss (202) zu dem dritten Anschluss (203) übertragenen Signals um 90 Grad;
Nicht-Reziprok-Phasenverschiebung eines von dem dritten Anschluss (203) zu dem vierten Anschluss (204) übertragenen Signals um 90 Grad;
Reziprok-Phasenverschiebung eines von dem vierten Anschluss (204) zu dem ersten Anschluss (201) übertragenen Signals um 90 Grad; und
wobei jeder des dritten und des vierten Anschlusses (203, 204) von dem ersten Anschluss (201) isoliert ist,
wobei das Verfahren ferner umfasst:

Empfangen, durch den ersten Anschluss (201), eines Übertragungseingabesignals;
Ausgeben, durch den zweiten Anschluss (202), eines Übertragungssignals zu einer Antenne oder Empfangen, durch den zweiten Anschluss (202), eines Signals von einer Antenne;
Empfangen, durch den dritten Anschluss (203), eines Signals von dem zweiten Anschluss (202), dem vierten Anschluss (204) oder beiden und Ausgeben, durch den dritten Anschluss (203), des empfangenen Signals zu einem Signalverarbeitungsabschnitt; und
Empfangen, durch den vierten Anschluss (204), eines Aufhebungseingabesignals und Einspeisen, durch den vierten Anschluss (204), eines Aufhebungseingabesignals in den dritten Anschluss (203);
wobei das Verfahren ferner umfasst:

Empfangen, durch den dritten Anschluss (203), des Aufhebungseingabesignals und

Einspeisen, durch den dritten Anschluss (203), des Aufhebungseingabesignals in den vierten Anschluss (204); und
Empfangen, durch den vierten Anschluss (204), eines Signals von dem zweiten Anschluss (202), dem dritten Anschluss (203) oder beiden und Ausgeben, durch den vierten Anschluss (204), des empfangenen Signals zu einem Signalverarbeitungsabschnitt.

**Revendications**

1. Dispositif quasi-circulateur (200) en quadrature comportant ;

un premier port (201), un deuxième port (202), un troisième port (203) et un quatrième port (204) ;
un premier déphaseur réciproque, RPS (205), à 90 degrés, entre le premier port (201) et le deuxième port (202) ;
un deuxième RPS (206) à 90 degrés entre le deuxième port (202) et le troisième port (203) ;
un troisième déphaseur non réciproque, NRPS (207), à 90 degrés, entre le troisième port (203) et le quatrième port (204); et
un quatrième RPS (208) à 90 degrés entre le quatrième port (204) et le premier port (201) ;
chacun des troisième et quatrième ports (203, 204) étant isolé du premier port (201) ; le premier port (201) étant configuré pour recevoir un signal d'entrée d'émission ;
le deuxième port (202) étant configuré pour délivrer un signal d'émission à une antenne ou pour recevoir un signal en provenance d'une antenne ;
le troisième port (203) étant configuré pour recevoir un signal en provenance du deuxième port (202), du quatrième port (204) ou des deux, et pour délivrer le signal reçu à une section de traitement de signaux : et
le quatrième port (204) étant configuré pour recevoir un signal d'entrée d'annulation et injecter le signal d'entrée d'annulation dans le troisième port (203),
le troisième port (203) étant en outre configuré pour recevoir le signal d'entrée d'annulation et injecter le signal d'entrée d'annulation au quatrième port (204) ; et
le quatrième port (204) étant en outre configuré pour recevoir un signal en provenance du deuxième port (202), du troisième port (203) ou des deux, et pour délivrer le signal reçu à une section de traitement de signaux.

**2.** Dispositif quasi-circulateur (200) en quadrature selon la revendication 1, une phase d'un trajet direct de signal des premier (201) à deuxième ports (202) vers le troisième port (203) étant de 180 degrés, et une phase d'un trajet direct de signal des premier (201) à quatrième ports (204) vers le troisième port (203) étant de 0 degré.

**3.** Dispositif quasi-circulateur (200) en quadrature selon la revendication 1 ou 2,

le signal d'entrée d'annulation reçu au niveau du quatrième port (204) étant utilisé pour annuler un signal de fuite causé au niveau du troisième port (203) lorsque le signal d'émission est délivré à partir du deuxième port (202), et/ou le signal d'entrée d'annulation reçu au niveau du troisième port (203) étant utilisé pour annuler un signal de fuite causé au niveau du quatrième port (204) lorsque le signal d'émission est délivré à partir du deuxième port (202).

**4.** Dispositif quasi-circulateur (200) en quadrature selon la revendication 3, configuré en outre pour :

diriger une partie déterminée d'une puissance du signal d'entrée d'annulation provenant du quatrième port (204), en particulier 4/9 de la puissance du signal d'entrée d'annulation, vers le troisième port (203) ; et/ou diriger une partie déterminée d'une puissance du signal d'entrée d'annulation provenant du troisième port (203), en particulier 4/9 de la puissance du signal d'entrée d'annulation, vers le quatrième port (204).

**5.** Dispositif quasi-circulateur (200) en quadrature selon l'une des revendications 1 à 4, configuré en outre pour :

fonctionner en mode semi-duplex ; et dans un mode d'émission, diriger toute la puissance du signal d'entrée d'émission reçu au niveau du premier port (201) vers le deuxième port (202).

**6.** Dispositif quasi-circulateur (200) en quadrature selon l'une des revendications 1 à 5, configuré en outre pour :

fonctionner en mode semi-duplex ; et dans un mode de réception, diriger une partie d'une puissance, en particulier 8/9 de la puissance, du signal provenant de l'antenne reçu au niveau du deuxième port (202) vers le troisième port (203) et le quatrième port (204), la partie de la puissance étant divisée de manière égale entre un premier signal direct du deuxième port (202) au troisième port (203) et un deuxième signal direct du deuxième port (202) au quatrième port (204), et une phase du deuxième signal direct étant en avance de 90 degrés sur une phase du premier signal direct.

**7.** Dispositif quasi-circulateur (200) en quadrature selon l'une des revendications 1 à 6, le dispositif quasi-circulateur (200) en quadrature étant en outre configuré, si un des quatrième (204) et troisième ports (203) est neutralisé, pour :
diriger toute la puissance du signal provenant de l'antenne reçu au niveau du deuxième port (202) vers l'autre des quatrième (204) et troisième ports (203).

**8.** Dispositif quasi-circulateur (200) en quadrature selon l'une des revendications 1 à 7, le dispositif quasi-circulateur (200) en quadrature étant configuré pour être appliqué à une architecture à entrées et sorties multiples, MIMO, en mode semi-duplex, en mode bidirectionnel simultané ou en mode duplex par répartition en fréquence, le signal d'entrée d'annulation étant utilisé pour annuler toutes les fuites propres et mutuelles.

**9.** Dispositif quasi-circulateur (200) en quadrature selon l'une des revendications 1 à 8, une matrice de dispersion S du dispositif quasi-circulateur (200) en quadrature étant représentée comme :

$$
S = \begin{bmatrix} 0 & j/3 & -2/3 & 2j/3 \\ j & 0 & 0 & 0 \\ 0 & 2j/3 & -1/3 & -2j/3 \\ 0 & -2/3 & 2j/3 & -1/3 \end{bmatrix},
$$

chaque terme $S_{xy}$ de la matrice de dispersion S représentant une partie de la racine carrée d'une puissance d'un signal qui est dirigé par le dispositif quasi-circulateur en quadrature du $y^{ème}$ port vers le $x^{ème}$ port, x et y pouvant chacun valoir 1, 2, 3, et 4 et x n'étant pas égal à y, et chaque terme $S_{xx}$ représentant une partie de la racine carrée d'une puissance d'un signal qui est réfléchi au niveau du $x^{ème}$ port.

**10.** Dispositif quasi-circulateur (200) en quadrature selon la revendication 9, lorsque le troisième port (203) ou le quatrième port (204) est neutralisé, la matrice de dispersion S du dispositif quasi-circulateur (200) en quadrature étant représentée comme :

$$
S = \begin{bmatrix} 0 & 0 & -1 \\ j & 0 & 0 \\ 0 & j & 0 \end{bmatrix}.
$$

**11.** Procédé réalisé par un dispositif quasi-circulateur (200) en quadrature doté d'un premier port (201), d'un deuxième port (202), d'un troisième port (203) et d'un quatrième port (204), le procédé comportant :

un déphasage réciproque de 90 degrés d'un signal transmis du premier port (201) au deuxième port (202) ;
un déphasage réciproque de 90 degrés d'un signal transmis du deuxième port (202) au troisième port (203) ;
un déphasage non réciproque de 90 degrés d'un signal transmis du troisième port (203) au quatrième port (204) ;
un déphasage réciproque de 90 degrés d'un signal transmis du quatrième port (204) au premier port (201) ; et
chacun des troisième et quatrième ports (203. 204) étant isolé du premier port (201), le procédé comportant en outre :

la réception, par le premier port (201), d'un signal d'entrée d'émission ;
la délivrance, par le deuxième port (202), d'un signal d'émission à une antenne, ou la réception, par le deuxième port (202), d'un signal provenant d'une antenne ;
la réception, par le troisième port (203), d'un signal provenant du deuxième port (202), du quatrième port (204) ou des deux, et la délivrance, par le troisième port (203), du signal reçu à une section de traitement de signaux ; et
la réception, par le quatrième port (204), d'un signal d'entrée d'annulation et l'injection, par le quatrième port (204), d'un signal d'entrée d'annulation dans le troisième port (203),
le procédé comportant en outre :

la réception, par le troisième port (203), du signal d'entrée d'annulation et l'injection, par le troisième port (203), du signal d'entrée d'annulation dans le quatrième port (204) ; et
la réception, par le quatrième port (204), d'un signal provenant du deuxième port (202), du troisième port (203) ou des deux, et la délivrance, par le quatrième port (204), du signal reçu à une section de traitement de signaux.

FIG. 1

EP 4 133 604 B1

**FIG. 2**

<u>200</u>

205

201

1. TX

$$\begin{pmatrix} 0 & j \\ j & 0 \end{pmatrix}$$

2. Antenna

202

208

$$\begin{pmatrix} 0 & j \\ j & 0 \end{pmatrix}$$

$$\begin{pmatrix} 0 & j \\ j & 0 \end{pmatrix}$$

206

4. SIC

$$\begin{pmatrix} 0 & j \\ -j & 0 \end{pmatrix}$$

3. RX

203

204

207

**FIG. 3**

<u>400</u>

| 401 | Reciprocal phase shift a signal transmitted from the first port to the second port by 90 degree. |

| 402 | Reciprocal phase shift a signal transmitted from the second port to the third port by 90 degree. |

| 401 | Non-reciprocal phase shift a signal transmitted from the third port to the fourth port by 90 degree. |

| 402 | Reciprocal phase shift a signal transmitted from the fourth port to the first port by 90 degree. |

**FIG. 4**

EP 4 133 604 B1